# EUROPEAN PATENT APPLICATION

(11) **EP 4 394 446 A1**
(43) Date of publication of application: **03.07.2024**
(21) Application number: 22217448.4
(22) Date of filing: 31.12.2022
(51) Int. Cl.: G01S 17/89, G01S 17/931, H05B 45/44, G01S 13/931

(54) **AUTOMOTIVE LIGHTING DEVICE AND METHOD FOR DETECTING AN OBJECT**

(71) Applicant: Valeo Vision, 93012 Bobigny Cedex (FR)
(72) Inventor: RENAUD, Pierre, 93012 BOBIGNY (FR); MIMOUN, Mickael, 93012 BOBIGNY (FR); EL IDRISSI, Hafid, 93012 BOBIGNY (FR); GOURDON, Matheo, 93012 BOBIGNY (FR); BEDDAR, Sid Ahmed, 93012 BOBIGNY (FR); PIQUARD, Geoffrey, 93012 BOBIGNY (FR); BEAUVAL, THOMAS, 93012 BOBIGNY (FR)
(74) Representative: Valeo Visibility

(57) **Abstract**

The present invention refers to an automotive luminous device (10) comprising
- a PCB (1) comprising at least a first outer layer (11), a first conductive plane (11, 12), a conductive shield (7, 14) and an intermediate layer (13) arranged between the first outer layer (11) and the conductive shield (7, 14), wherein the intermediate layer (13) comprises tracks (2);
- an electroluminescent incoherent light source (3) installed in the first outer layer (11) of the PCB (11) and connected to the tracks, the light source being configured to emit a pulsed light flux modulated according to a code, while contributing to a lighting or signalling function;
- a high frequency driver element (6) installed in the PCB (1), configured to power the light source (3) with a control signal modulated in a frequency higher than 1 MHz, delivered to the light sources through the tracks, so that the light source emits light modulated according to the code;
- a sensor element configured to receive the pulsed light flux reflected by the outer object.

## Description

### TECHNICAL FIELD

This invention is related to the field of automotive luminous devices, and more particularly, to the ones used to detect objects surrounding the vehicle.

### STATE OF THE ART

Driving assistance comprises the use of sensors to inform the driver (or to directly inform the vehicle) of objects surrounding the vehicle. This is extremely useful for autonomous driving, but also for maned vehicles, where driving aids are helpful and are becoming mandatory in new regulations.

To achieve this goal, sensors play a crucial role, since they receive the information from the exterior of the vehicle, containing the data that will be interpreted in order to create a map of the surrounding objects.

There are many different sensors which are intended to accomplish this mission. Most of them use ultrasound, with acoustic pulses. Cameras are also adapted to acquire infrared or visible ambient light.

Light is also used to detect outer objects, using LiDAR (Light Detection And Ranging) technology. However, to use this technology, a high frequency signal must be created to control the light emission devices. This high frequency signal is a problem for electronic components, due to electromagnetic interference caused by the electric signal at these frequencies.

Moreover, LiDARs usually use a dedicated radiation system that emits infrared light. Such an additional device is costly and bulky, its physical and esthetical integration in the vehicle being made more difficult by the fact that the light must be efficiently transmitted to the outside of the vehicle.

The present invention provides a way of solving this problem.

### DESCRIPTION OF THE INVENTION

The invention provides an automotive luminous device for detecting an object exterior to the vehicle comprising:
- a printed circuit board comprising at least a first outer layer and a first conductive plane,
- a conductive shield positioned along the printed circuit board, the printed circuit board comprising an intermediate layer arranged between the first outer layer and the conductive shield, wherein the intermediate layer comprises intermediate conductive tracks;
- an electroluminescent incoherent light source installed in the first outer layer of the printed circuit board and electrically connected to the intermediate conductive tracks, the incoherent light source being configured to emit a pulsed light flux modulated according to a code, said light flux said light being visible, the pulsed light flux contributing to a lighting or signalling function;
- a high frequency driver element installed in the printed circuit board and connected to the intermediate conductive tracks, configured to power the incoherent light source by the means of a control signal, transmitted to the incoherent light sources through the intermediate conductive tracks, the control signal being modulated in a frequency higher than 1 MHz so that the incoherent light source emits light modulated according to the code;
- a sensor element configured to receive the pulsed light flux, modulated according to the code, emitted by the incoherent light source, that is reflected by the outer object.

The invention uses at least one electroluminescent incoherent light source of the type best suited for lighting and signalling, as opposed to laser sources, which emit spatially and temporally coherent light, are more expensive, and pose security risks regarding eye safety that are costly and complex to mitigate. Although not as complex to integrate into a lighting or signalling device, incoherent electroluminescent light sources are more difficult to drive, especially at high frequencies above 1MHz. The inventive device allows to integrate high-frequency controlled incoherent light sources into ordinary lighting or signalling devices.

The term "conductive plane" should be understood as a piece of conductive material which has the shape of a sheet and the consistency of a continuous element. The main difference between the conductive plane in the sense of the invention and a conductive element which is not a conductive plane is the fact that the conductive plane is not carved by conductive tracks. The only allowed discontinuities are holes to let vias pass across them. This concept of "plane" is opposed to an alternative, which would be a mesh of tracks or wires thereby forming a Faraday cage. However, this kind of arrangement is more costly to design and manufacture, and its radiation blocking behaviour lacks robustness. Thus, a plane is preferred as it is more robust and reliable.

With this lighting device, the high frequency signal created by the driver element to power the incoherent light source is shielded by a conductive cage comprising the first conductive layer and the conductive shield, which acts as a Faraday cage to prevent electromagnetic interferences from affecting other electronic components. Otherwise, every electronic component would act as an antenna, thus creating electromagnetic interferences with the proper operation of the rest of the electronic elements of the lighting device. With the present invention, this is avoided.

In some particular embodiments, the control signal is modulated in a frequency comprised between 50 MHz and 100 MHz.

This frequency provides a good compromise between a good accuracy in object detection and a fair efficiency in the LEDs operation.

In some particular embodiments, the incoherent light source contributes to a daytime running lamp signalling function. Preferably, the incoherent light source also contributes to a position lamp signalling function..

The fact that both Position Light (a night time function) and a a daytime running lamp (a day time function) may be performed by a single light source or group of light sources emitting pulsed light enables both day and night use of the detection function, while simplifying the whole design..

In some particular embodiments, the incoherent light source is a white LED comprising a blue electroluminescent element, preferably a blue LED chip, for example a GaN or InGaN-type LED, and a wavelength conversion material, such as a phosphor. Alternatively, other incoherent light sources such as OLED may suit the invention.

The use of a blue LED chip increases the efficiency of the light source, and the wavelength conversion material, such as a phosphor layer, provides the wavelength necessary for the final emitted light to be according to regulations. Further, a wavelength conversion material has a reaction time long enough that it is not able to follow high frequency driving necessary for an output in the range of MHz, thereby forming a low pass filter on the converted wavelengths. The blue electroluminescent element, in particular in the case of a blue LED chip does not limit the bandwidth in a similar fashion; therefore, although the light will appear in an allowable colour, only the blue light will carry the information.

In some particular embodiments, the intermediate conductive tracks have a width lower than 0.5 mm.

Track matching is an important question when dealing with high frequency. As a rule of design, it is advantageous that the width of the conductive track is lower than a tenth of the wavelength divided by the square of the dielectric constant of the printed circuit board.

In some particular embodiments, the conductive tracks of the control layer have a radius of curvature equal or greater than three times its width.

With such a radius of curvature, damage to the conductive tracks is avoided due to the high frequency.

In some particular embodiments, the first conductive plane is made of copper.

In some particular embodiments, the conductive shield is made of copper.

Copper is the conductive material that offers better shielding properties in the frequency range which is usually used by the high frequency driver.

Preferably, the first conductive plane is formed in one of the layers of the printed circuit board.

Preferably, the conductive shield is a conductive plane formed in one of the layers of the printed circuit board.

It is much cheaper to manufacture a conductive plane formed on the printed circuit board.

In some particular embodiments, the first conductive plane is formed on the first outer layer.

This can be achieved, for example, by a FR4 printed circuit board, which has a first outer layer (that is to say an exterior layer defining the top surface of the PCB) which is a continuous copper plane. This first outer layer would act as the first conductive plane of the invention, without the need of a further layer for accommodating the first conductive plane. Preferably, this outer layer is used to connect the incoherent light source to the ground.

In some particular embodiments, the first outer layer is covered with a black solder mask, for instance anodized aluminium layer.

This black solder mask improves the heat dissipation by means of a radiation mechanism. Black covering improves the radiation dissipation, in particular when the solder mask is a black anodized aluminium layer.

In some particular embodiments, the automotive lighting device further comprises a via, and the incoherent light source is installed on the via and the via enables an electric connection between the incoherent light source and the intermediate conductive tracks.

With this direct connection, the outer layer does not need any other discontinuity than the via, and this is closed by the incoherent light source or by a pad where the incoherent light source is installed, thus closing the gaps and improving electromagnetic shielding.

In some particular embodiments, the high-frequency driver is installed in an outer surface of the intermediate layer, which is arranged in an outer position opposite to the first outer layer, and the conductive shield is an aluminium heatsink, arranged to provide a partial encapsulation for the high-frequency driver.

In this case, the shielding protection is defined by the conductive plane and by the heatsink, which closes the protection in the other plane, so that the intermediate layer is enclosed between the conductive plane and the heatsink. The heatsink is arranged to provide a partial encapsulation for the driver, such that an envelope of the driver is completely surrounded by the heatsink and by the printed circuit board. Hence, heat dissipation in the driver is optimal, since a great portion of the driver is directly surrounded by the heatsink. Meanwhile, such an encapsulation shields the other components from electromagnetic radiation originating from the driver itself.

In some particular embodiments, the automotive lighting device further comprises a heatsink which comprises
a main surface which is in thermal contact with the printed circuit board; and
a lateral surface which is in thermal contact with the lateral surface of the printed circuit board.

The heatsink may be arranged to cover the lateral surface of the printed circuit board, thus improving the electromagnetic shielding, due to its electrically conductive properties.

In some particular embodiments, the first conductive plane is comprised between the first outer layer and the intermediate layer.

This can be achieved, for example, by placing a grounded continuous layer between the first outer layer and the intermediate layer. The incoherent light source would be placed in the outer layer and a via would cross this continuous conductive layer to enable the electric connection between the incoherent light source and the intermediate layer. An ad-hoc continuous layer improves the shielding for the electromagnetic signal which is transmitted by the intermediate layer.

In some particular embodiments, the conductive shield is a second conductive plane arranged so that the intermediate layer is comprised between the first conductive plane and the second conductive plane.

This second ad-hoc plane improves the electromagnetic shielding.

In some particular embodiments, the first conductive plane and/or the second conductive plane is connected to ground.

This ground connection, which in other cases would be useless, is now useful to provide the electromagnetic shielding.

In some particular embodiments, the incoherent light source receives voltage from the power supply and the high frequency driver element is arranged downstream of the incoherent light source, thus acting as a current sink for the incoherent light source with respect to the power supply.

In some particular embodiments, the distance between the intermediate layer and the first conductive plane is the same as the distance between the intermediate layer and the conductive shield.

Electromagnetic protection is improved when the arrangement of the intermediate layer is symmetric with respect to the first conductive plane and the **conductive shield.**

In some particular embodiments, the first conductive plane is thermally connected by means of at least one, preferably full, thermal via. Preferably, more than one such thermal vias are set up in parallel, hence reducing potential inductance effects and increasing the thermal transfer between the two layers. Preferably, thermal vias are grounded. Preferably, said thermal vias may cross the printed circuit board entirely, however thermal vias may also be blind.

This thermal via improves thermal dissipation between the conductive elements, since it allows that heat generated in the conductive elements is dissipated by conduction to different parts. Full vias improve this effect, since it has a greater surface for heat exchange. Full vias are filled with a conductive material. This material can be copper, due to its good thermal properties, but different conductive materials may be chosen. Alternatively, stacks of microvias may advantageously provide a full thermal via.

In some particular embodiments, the first outer layer comprises at least a pad-type terminal directly continuous with at least a thermal via in the thickness direction of the printed circuit board, and at least one of the incoherent light sources comprises
- first light source terminals connections for electrically connecting the light source to the intermediate tracks; and
- second light source terminals different from the first terminals intended to create a thermal contact between the incoherent light source and the printed circuit board,
- at least one of said second terminals being thermally connected to the at least one thermal via.

Due to the high frequency operation of the driver element, heat dissipation is a crucial aspect in this invention. Hence, separate thermal connections are advantageous to keep the temperature of the device within acceptable ranges.

In a second inventive aspect, the invention provides a method for detecting an object exterior to the vehicle by an automotive lighting device according to the first inventive aspect., the method comprising the steps of
- operating the driver element to create the control signal modulated in a frequency comprised between 5 MHz and 100 MHz;
- operating the light source to project the first lighting function with a frequency according to the control signal;
- receiving in the sensor element some light reflected by the object.

This method allows the detection of an object exterior to the vehicle by means of an automotive lighting device, which provides a lighting function.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a first embodiment of an automotive luminous device according to the invention.
Figure 2 shows a second embodiment of an automotive luminous device according to the invention.
Figure 3 shows a particular aspect of the connection between the LEDs and the upper layer in an automotive lighting device according to the invention.
Figure 4 shows a detail of one of the intermediate conductive tracks of any of the embodiments shown above, belonging to a lighting device according to the invention.

In these figures, the following reference numbers have been used:
- 1: Printed circuit board
- 2: Intermediate conductive tracks
- 3: LED
- 4: Electric pads
- 5: Thermal via
- 6: Driver element
- 7: Heatsink
- 8: Electric via
- 9: Thermal connector
- 10: Lighting device
- 11: First outer layer of the printed circuit board
- 12: First copper plane of the printed circuit board
- 13: Intermediate layer of the printed circuit board
- 14: Second copper plane of the printed circuit board
- 15: Second outer layer of the printed circuit board

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

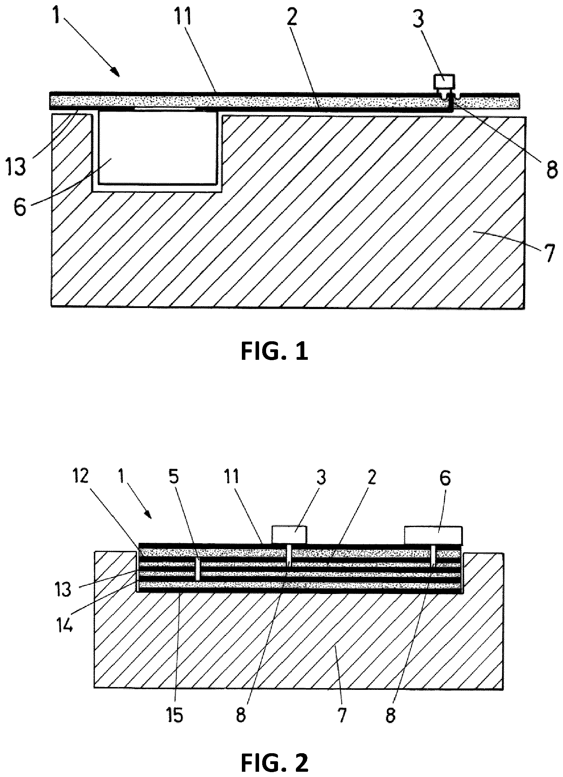

Figure 1 shows a first perspective view of some elements of an automotive lighting device according to the invention, which in this case is a rear lamp.

In this figure, a representation of a printed circuit board 1 belonging to this automotive lighting device is seen.

This first printed circuit board 1 comprises a first outer layer 11 and an intermediate layer 13. The intermediate layer 13 comprises intermediate conductive tracks. A group of LEDs 3 are installed in the first outer layer 11 by means of pads. The light emitted by the LEDs 3 is intended to perform a passing beam and a driving beam function. The operation of these LEDs 3 is commanded by a high frequency driver element 6, which is installed in the intermediate layer 13, and which provides a control signal to the LEDs 3 so that the corresponding lighting function is emitted. However, this lighting function is not emitted in a continuous way, but in the shape of a digital signal modulated in a frequency of 50 MHz. In this way, the emitted pattern contains high frequency information that can be retrieved after being reflected by an outer object.

The LEDs 3 are installed in the upper visible top layer, which is the first outer layer 11 of the printed circuit board 1. However, the conductive tracks that connect the driver element 6 with the LEDs 3 are arranged on the intermediate layer 13 of this printed circuit board 11. This is because these conductive tracks are transmitting a high frequency information, and thus create electromagnetic interference, which may disturb the operation of the rest of the electronic elements of the lighting device. To avoid these interferences, the conductive tracks of the second layer are shielded by two conductive planes.

The first conductive plane is the first outer layer 11, which acts as a continuous copper plane to contribute to this electromagnetic shielding. This first outer layer 11 comprises an electric via 8, which is full, to connect the pads of the LEDs to the intermediate tracks of the intermediate layer 13.

The second conductive plane is the heatsink 7, which is located adjacent to the intermediate layer 13. This heatsink has a shape to create a partial encapsulation for the high frequency driver, thus improving the thermal dissipation of this component.

The heatsink 7 forms a closed cage with the first outer layer 11, thus leaving the intermediate layer 13 surrounded by conductive planes.

The high frequency driver 6 is directly installed on the intermediate layer 13, so it does not need any special electric connection to reach the intermediate conductive tracks.

In some cases, the first outer layer is covered with a black solder mask, for instance anodized aluminium layer, thus increasing the heat dissipated by radiation and improving the thermal behaviour of the printed circuit board.

Thermal behaviour is especially important in the present invention, since LEDs 3 are fed with a voltage which is much higher than usual, so generated heat is also higher than usual.

Figure 2 shows a perspective view of an alternative embodiment of some elements of an automotive lighting device according to the invention.

In this figure, a representation of a printed circuit board 1 belonging to this automotive lighting device is seen.

This first printed circuit board 1 comprises a first outer layer 11, a second outer layer 15, an intermediate layer 13 and two grounded copper planes 12, 14. The intermediate layer 13 comprises intermediate conductive tracks. A group of LEDs 3 are installed in the first outer layer 11 by means of pads. The LEDs 3 are intended to provide a passing beam and a driving beam functionality. The operation of these LEDs 3 is commanded by a high frequency driver element 6, which is also installed in the first outer layer 11, and which provides a control signal to the LEDs 3 so that the corresponding lighting function is emitted. However, this lighting function is not emitted in a continuous way, but in the shape of a digital signal modulated in a frequency of 50 MHz. In this way, the emitted pattern contains high frequency information that can be retrieved after being reflected by an outer object.

Both the LEDs 3 and the high frequency driver 6 are installed in the upper visible top layer, which is the first outer layer 11 of the printed circuit board 1. However, the conductive tracks that connect the driver element 6 with the LEDs 3 are arranged on the intermediate layer 13 of this printed circuit board 11. This is because these conductive tracks are transmitting high frequency signal, and thus create electromagnetic interference, which may disturb the operation of the rest of the electronic elements of the lighting device. To avoid these interferences, the conductive tracks of the second layer are shielded by two conductive planes.

In this case, the conductive planes are copper grounded layers 12, 14, which are grounded and which are located within the printed circuit board 1, in such a way that the intermediate layer 13 is sandwiched between the copper grounded layers 12, 14. The first copper grounded layer 12 is arranged between the first outer layer 11 and the intermediate layer 13, while the second copper grounded layer 14 is arranged between the intermediate layer 13 and the second outer layer 15. Hence, two electric vias 8 are used to create an electric connection between the intermediate conductive tracks and the LEDs 3 and the driver 6. The distance between the intermediate layer 13 and the first copper ground layer 12 is the same as the distance between the intermediate layer 13 and the second copper ground layer 14, thus improving electromagnetic protection.

The first copper ground layer 12 and the second copper ground layer 14 are also thermally connected by means of full thermal vias 5. These thermal vias improve thermal dissipation between the copper ground layers, since they allow that heat generated in the copper ground layers is dissipated by conduction to different parts. Since they are both at ground level, it is no problem to perform further connections between them.

This device also comprises a heatsink 7, which is located adjacent to the second outer layer 15. This heatsink covers the lower surface of the second outer layer and also the lateral surface of the printed circuit board. Hence, it forms a closed cage with the first and second copper grounded layers 12, 14, thus leaving the intermediate layer 13 surrounded by conductive planes.

In this case, the only inputs which are needed by the printed circuit board are the power supply, the signal input and the ground connection. Optionally, a clock signal may also be provided.

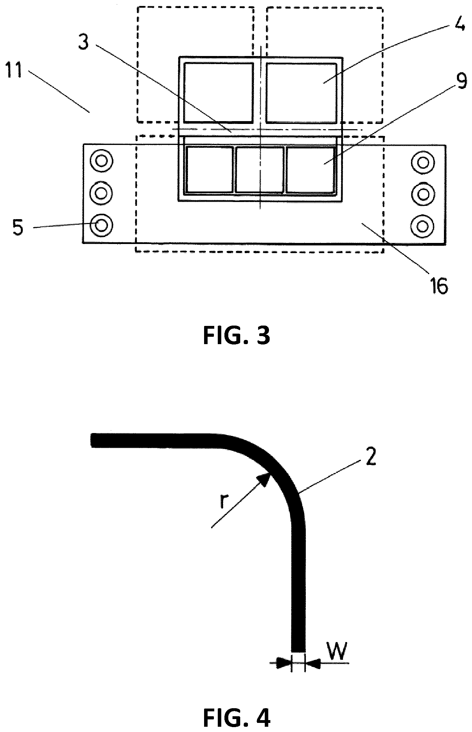

Figure 3 shows a particular aspect of the connection between the LEDs and the upper layer. This aspect of the invention may be applied to any of the preceding embodiments, since it only requires the LED and the outer layer, either if it works as the copper plane or if there is an additional cooper plane below.

The connection between the LED 3 and the outer layer 11 comprises an electric connection, which is provided by electric pads 4, and a thermal connection, which is provided by thermal connectors 9.

The pads are connected to corresponding electric connections located in the first outer surface 11. On the other hand, the thermal connectors, which only have a thermal purpose, without any current transmission, are arranged in direct contact with a copper element 16 which is in turn in direct connection with a plurality of full thermal vias 5 arranged between the first outer layer and the second outer layer, which is in turn adjacent to the heatsink.

With this arrangement, heat which is generated in the LED is transmitted in a very fast and direct way to the heatsink, by means of the thermal vias which are in thermal contact with the thermal pads of the LED.

Figure 4 shows a detail of one of the intermediate conductive tracks of any of the embodiments shown above, belonging to a lighting device according to the invention.

The intermediate conductive tracks have a width lower than 0.5 mm. This value is adequate for standard values of dielectric constant of printed circuit boards, and for the frequency of operation of the high frequency driver. Also, the conductive tracks of the control layer have a radius of curvature equal or greater than three times its width, which is advantageous in the event of high frequency signals, to avoid problems of square corners.

With any of the configurations shown above, an automotive lighting device according to the invention may perform an object detection method, comprising the following steps:
- operating the driver element to create the control signal with frequency of 50 MHz;
- operating the light source to project the first lighting function with a frequency according to the control signal;
- receiving in the sensor element some light reflected by an outer object;
- operating the control unit to process the information received from the sensor element.

## Claims

1. Automotive luminous device (10) for detecting an object exterior to the vehicle, comprising
- a printed circuit board (1) comprising at least a first outer layer (11) and a first conductive plane (11, 12),
- a conductive shield (7, 14) positioned along the printed circuit board, the printed circuit board comprising an intermediate layer (13) arranged between the first outer layer (11) and the conductive shield (7, 14), wherein the intermediate layer (13) comprises intermediate conductive tracks (2);
- an electroluminescent incoherent light source (3) installed in the first outer layer (11) of the printed circuit board (11) and electrically connected to the intermediate conductive tracks, the incoherent light source being configured to emit a pulsed light flux modulated according to a code, said light being visible, the pulsed light flux contributing to a lighting or signalling function;
- a high frequency driver element (6) installed in the printed circuit board (1) and connected to the intermediate conductive tracks, configured to power the incoherent light source (3) by the means of a control signal, transmitted to the incoherent light sources (3) through the intermediate conductive tracks (2), the control signal being modulated in a frequency higher than 1 MHz so that the incoherent light source emits light modulated according to the code;
- a sensor element configured to receive the pulsed light flux, modulated according to the code, emitted by the incoherent light source (3), that is reflected by the object.

2. Automotive lighting device according to claim 1, wherein the control signal is modulated in a frequency comprised between 5 MHz and 100 MHz.

3. Automotive luminous device according to any of the preceding claims, wherein the sensor is configured to compute a time of flight of the light flux between the incoherent light source and the object, based on a comparison, preferably a correlation, of the modulation of the received light with the modulation of the emitted pulsed light.

4. Automotive luminous device according to any of the preceding claims, wherein the lighting function is a daytime running lamp, and preferably, the incoherent light source also contributes to the position lamp function.

5. Automotive luminous device according to any of the preceding claims, wherein the intermediate conductive tracks (2) have a width lower than 0.5 mm and the conductive tracks of the control layer have a radius of curvature equal or greater than three times its width.

6. Automotive luminous device according to any of the preceding claims, wherein the first conductive plane is formed on the first outer layer (11).

7. Automotive luminous device according to any of the preceding claims, further comprising a via (8) and wherein the incoherent light source (3) is installed on the via (8) and the via (8) enables an electric connection between the incoherent light source (3) and the intermediate conductive tracks (2).

8. Automotive lighting device according to any of the preceding claims, wherein the first outer layer is covered with a black solder mask, for instance anodized aluminium layer.

9. Automotive lighting device according to any of the preceding claims, wherein the first conductive plane is comprised between the first outer layer and the intermediate layer.

10. Automotive lighting device according to any of the preceding claims, wherein the incoherent light source receives voltage from the power supply and the high frequency driver element is arranged downstream of the incoherent light source, thus acting as a current sink for the incoherent light source with respect to the power supply.

11. Automotive lighting device according to any of the preceding claims, wherein the first outer layer comprises at least a pad-type terminal directly continuous with at least a thermal via in the thickness direction of the printed circuit board, and at least one of the incoherent light sources comprises
- first light source terminals connections (4) for electrically connecting the light source to the intermediate tracks; and
- Second light source terminals (9) different from the first terminals intended to create a thermal contact between the incoherent light source and the printed circuit board,
- at least one of said second terminals being thermally connected to the at least one thermal via.

12. Automotive lighting device according to any of the preceding claims, wherein the conductive shield is a second conductive plane formed on a layer of the printed circuit board, arranged so that the intermediate layer is comprised between the first conductive plane and the second conductive plane.

13. Automotive lighting device according to the preceding claim, wherein the first conductive plane and/or the second conductive plane is connected to ground.

14. Automotive lighting device according to any of the preceding claims, wherein the distance between the intermediate layer and the first conductive plane is the same as the distance between the intermediate layer and the conductive shield.

15. Automotive lighting device according to any of claims 1 to 11, wherein the high-frequency driver is installed in an outer surface of the intermediate layer, which is arranged in an outer position opposite to the first outer layer, and the conductive shield is an aluminium heatsink, arranged to provide a partial encapsulation for the high-frequency driver.
